# EUROPEAN PATENT SPECIFICATION

(11) **EP 4 357 167 B1**
(45) Date of publication and mention of the grant of the patent: **27.08.2025**
(21) Application number: 23201103.1
(22) Date of filing: 02.10.2023
(51) Int. Cl.: B60C 19/00

(54) **A TYRE HAVING SOUND-ABSORBING MATERIAL AND A METHOD FOR MANUFACTURING THE SAME**
REIFEN MIT SCHALLABSORBIERENDEM MATERIAL UND VERFAHREN ZU SEINER HERSTELLUNG
PNEUMATIQUE AYANT UN MATÉRIAU INSONORISANT ET SON PROCÉDÉ DE FABRICATION

(30) Priority: 19.10.2022 FI 20225946
(43) Date of publication of application: 24.04.2024
(73) Proprietor: Nokian Renkaat Oyj, 37101 Nokia (FI)
(72) Inventor: OJALA, Mr. Jari, 37130 Nokia (FI)
(74) Representative: Berggren Oy

(56) References cited:
- EP-A1- 1 577 123
- EP-A1- 2 017 092
- EP-A1- 2 239 152
- EP-A1- 3 706 990
- EP-A1- 3 970 998
- EP-A2- 1 728 650
- JP-A- 2010 047 053

## Description

### Technical field

The invention relates to tyres having noise-supressing characteristics obtained by using sound-absorbing material. The invention relates to pneumatic tyres. The invention relates to tyres for passenger cars. The invention relates to methods for manufacturing such tyres.

### Background

Tyres having noise-supressing characteristics are known e.g. from the document US 2005/0155686 A1. As shown therein, to supress noise sound-absorbing material is provided to an interior of a tyre.

As shown in Figs. 2 and 3 of that document a band-like noise suppressing body extends in the tyre circumferential direction on an inner side of a tyre. The ends of the band may be separated from each other; or the ends may be integrally connected to each other by adhesive.

It has been found that to improve the sound-supressing properties of the tyre, preferably one should rather use more sound-absorbing material than less. Thus, the gap(s) (if any) in between the ends of the band-like element(s) should only be narrow.

As discussed above, if the ends of the band are connected to each other, they are connected by using adhesive. This reduces the problem of the sound-absorbing material wearing in use.

However, it has been found that joining the ends of the band-like element(s) together with adhesive requires a lot of manual work and still oftentimes the band-like element(s) tend to detach from the tyre in use.

Therefore, there is a need for a such a method that a band-like element (hereinafter a ribbon) can be attached to the inner surface of a tyre in a reliable manner so that no gaps or only a narrow gap is arranged between the ends of the ribbon. There is also a need for a tyre, wherein the ribbon is attached in a reliable manner so that no gaps or only a narrow gap is arranged between the ends of the ribbon. Moreover, in line with the prior art, the wear of the sound absorbing material in such a solution should be diminished. Finally, the noise-absorbing material should be applied in such a way that the mass of the tyre is balanced about the rotational axis.

In this field, in the publication EP 3 970 998 A1 a sound damper (30) is formed by affixing foam material to a tire inner cavity surface to form a ring shape, with the other surface of the foam material being toward an outer circumference, and end faces of the foam material in the longitudinal direction abut each other and are bonded. The document EP 2 017 092 A1 discloses a pneumatic tire to be attached to a rim, provided with a noise damper made of a spongy material. Noise dampers having the same cross-sectional shape are used in a size group of pneumatic tires which include a minimum volume tire and a maximum volume tire.

### Summary

It has been found that the detachment problems of the ribbon are related to the ends of the ribbon compressing each other particularly on the side closer to the rotational axis of the tyre.

To this end, it has been found that by using such a ribbon, of which shape tapers towards an end of the ribbon so that its local thickness decreases towards the end of the ribbon, the ends of the ribbon on the inner side of the ribbon do not compress each other, which seemingly overcomes the problem. Moreover, at the same time, to have a lot a noise-supressing material, at least a part of the second end of the ribbon is compressed against the first end of the ribbon

Moreover, even if the noise-absorbing material of the ribbon is generally lightweight no gap at all generally implies a better mass-balance than a wide gap; unless compensated by other gaps, which however, would imply decreasing the amount of the noise-absorbing material.

Finally, it has been found that the tapering shape of at least one end of the ribbon has the effects that a contact area (if any) of the ends of the ribbon remain small, which decreases the problem of the sound-absorbing material wearing in use.

The method and the tyre according to the invention is disclosed more specifically in the independent claims.

In a preferably embodiment, the shape of the ribbon tapers towards an end of the ribbon so that an angle of inclination is approximately 45 degrees (30 to 60 degrees, e.g. 40 to 50 degrees). This, on one hand relieves the compressive stress from the ends of the ribbon, and on the other hand ensures that a significant portion of the ribbon is non-tapering, which implies a reasonably high amount of the noise-suppressing material; and also implies a reasonably good mass balance.

In a preferably embodiment, the shape of the ribbon tapers towards only one end of the ribbon. Also this ensures that a significant portion of the ribbon is non-tapering, which implies a reasonably high amount of the noise-suppressing material; and also implies a reasonably good mass balance.

### Brief description of the drawings

- Fig. 1a: shows in a perspective view, a tyre comprising a ribbon of noise-absorbing material, the tyre being arranged on a surface 900,
- Fig. 1b: shows in a perspective view, a body of the tyre of Fig. 1a, i.e. the tyre except the a ribbon of noise-absorbing material,
- Fig. 1c: shows a quarter of a cross section of a tyre,
- Fig. 1d: shows a half of a cross section of a tyre,
- Fig. 1e: shows in a perspective view, an exploded view of some parts of a tyre,
- Fig. 1f: shows in a perspective view, an exploded view of some parts of a tyre,
- Fig. 2a: shows in a side view a ribbon to be attached to a body of a tyre,
- Fig. 2b: shows in a top view a ribbon to be attached to a body of a tyre,
- Fig. 2c: shows in a bottom view a ribbon to be attached to a body of a tyre,
- Fig. 3a: shows attaching a ribbon to a body of a tyre to form the tyre, wherein a length of the ribbon is substantially equal to a circumference of an inner surface of the body of the tyre,
- Fig. 3b: shows attaching a ribbon to a body of a tyre to form the tyre, wherein a length of the ribbon is somewhat greater than a circumference of an inner surface of the body of the tyre,
- Fig. 3c: shows attaching a ribbon to a body of a tyre to form the tyre, wherein a length of the ribbon is somewhat smaller than a circumference of an inner surface of the body of the tyre,
- Fig. 4a: shows in a side view a ribbon to be attached to a body of a tyre,
- Fig. 4b: shows in a side view a ribbon to be attached to a body of a tyre,
- Fig. 5a: shows the detail Va of Fig. 3a together with some directions of the detail,
- Fig. 5b: shows the detail Vb of Fig. 3b,
- Fig. 5c: shows the detail Vc of Fig. 3c,
- Fig. 6a: shows in a top view a ribbon to be attached to a body of a tyre, and
- Fig. 6b: shows in a side view a ribbon to be attached to a body of a tyre.

### Detailed description

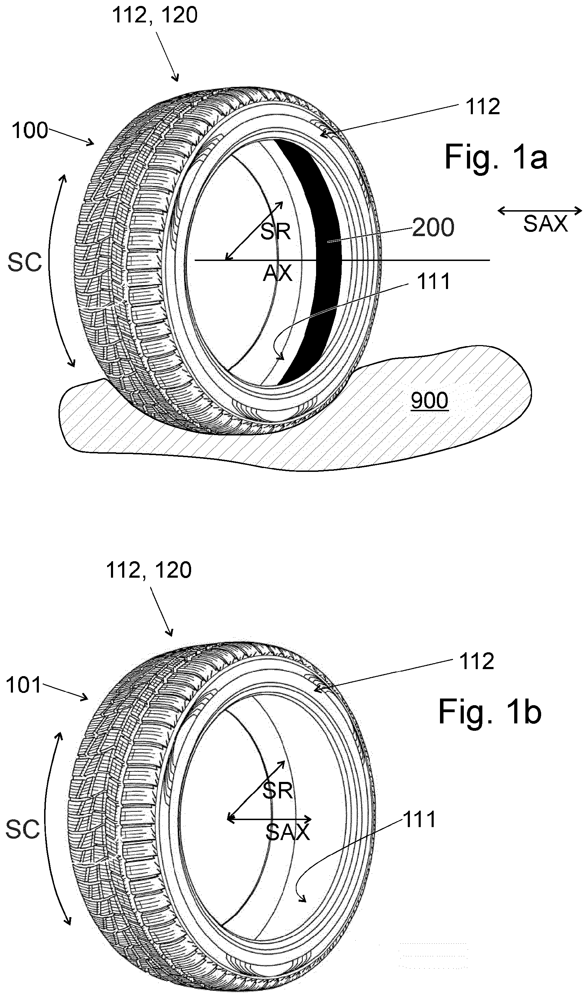

Fig. 1a shows in a perspective view a tyre 100. The tyre 100 is tubeless pneumatic tyre. The tyre 100 is tubeless pneumatic tyre intended for use as a tyre of a passenger car in regular road use. The tyre 100 comprises an inner surface 111, which is opposite to an outer surface 112 of the tyre 100. The tyre 100 comprises a tread 120 on its outer surface 112. The tread 120 has circumferential and transversal grooves, said grooves defining a number of tread blocks. The tread 120 is meant for a rolling contact against a ground surface 900, such as the road. The grooves are meant for draining water and/or slush that is possibly located on the ground surface away from the tread 120, so that the contact between the tread 120 and the ground surface 900 is as good and consistent as possible. Studs may be provided on the tread 120. The tyre 100 has a tubular shape, which defines an axis of rotation AX for the tyre 100. In use, the tyre 100 in configured to rotate about the axis of rotation AX.

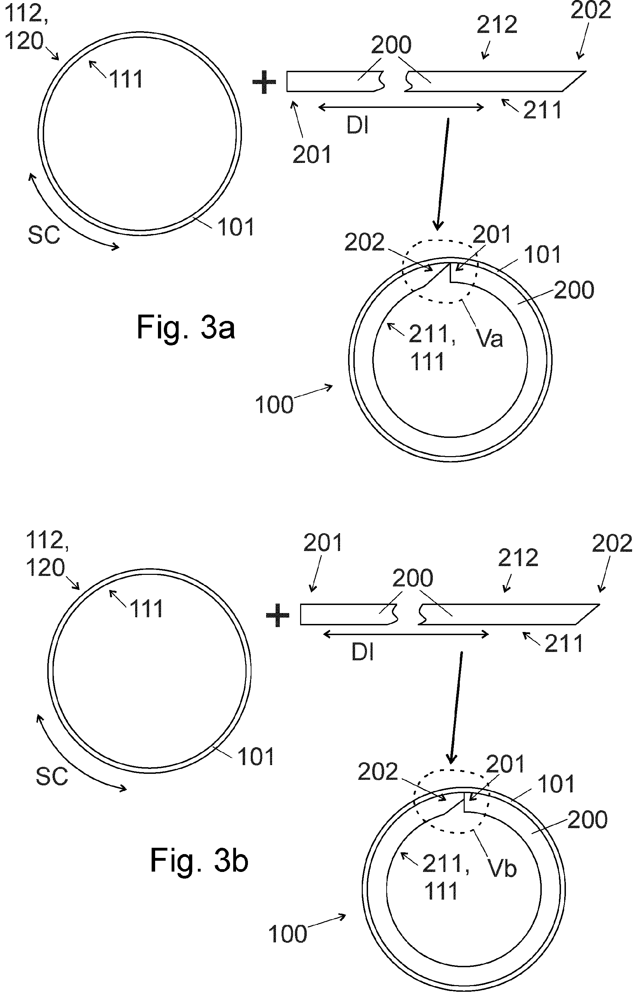

In order to reduce the noise generated by the tyre 100 in use, the tyre 100 comprises sound-absorbing material on an inner side of the tyre 100. The sound-absorbing material is formed as a ribbon 200 and attached to a body 101 of the tyre 100. Thus, the ribbon 200 comprises the sound-absorbing material. With reference to Figs. 3a to 3c, the ribbon 200 is attached on the inner side of the body 101 of the tyre, particularly opposite to the tread 120, in such a way that a first main surface 211 of the ribbon 200 faces the axis AX of rotation of the tyre. The whole ribbon 200 needs not be opposite the tread 120; instead, the ribbon 200 may be e.g. wider than the tread 120. However, at least a part of the ribbon 200 is arranged opposite the tread 120. Typically, the first main surface 211 of the ribbon 200 forms a part of the inner surface 111 of the tyre 100. However, if needed, the ribbon 200 could be coated by some other material forming the inner surface 111. Thus, in an embodiment, the first main surface 211 of the ribbon 200 or a coating thereof forms a part of the inner surface 111 of the tyre 100.

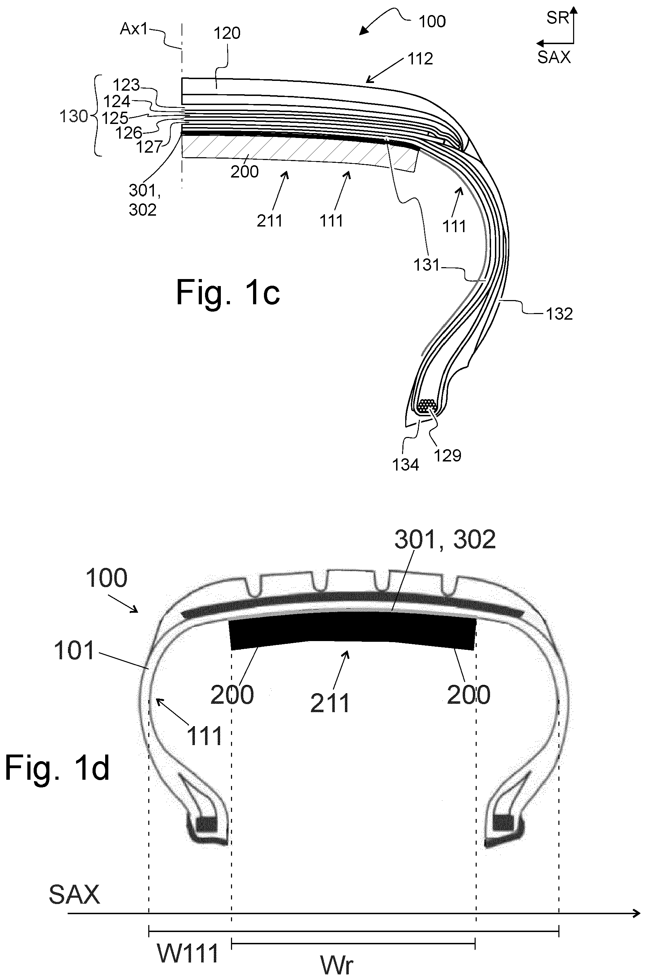

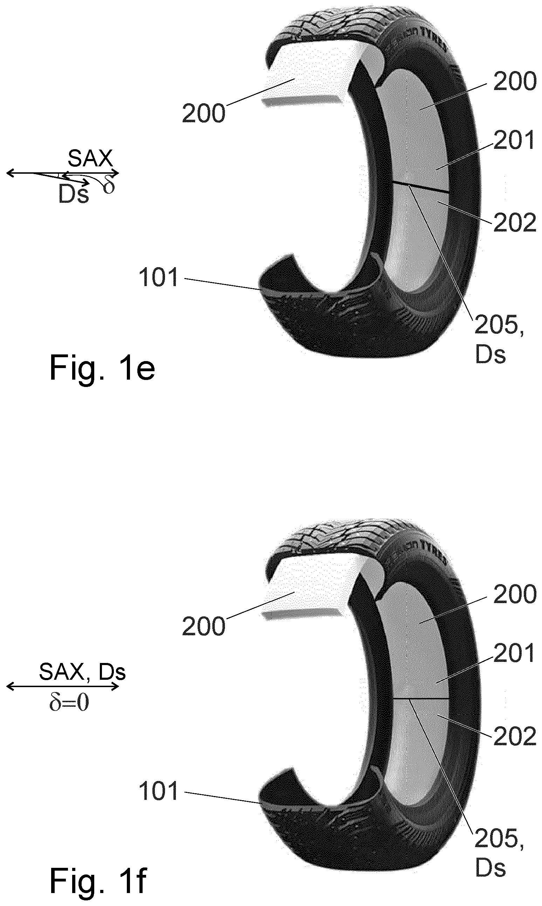

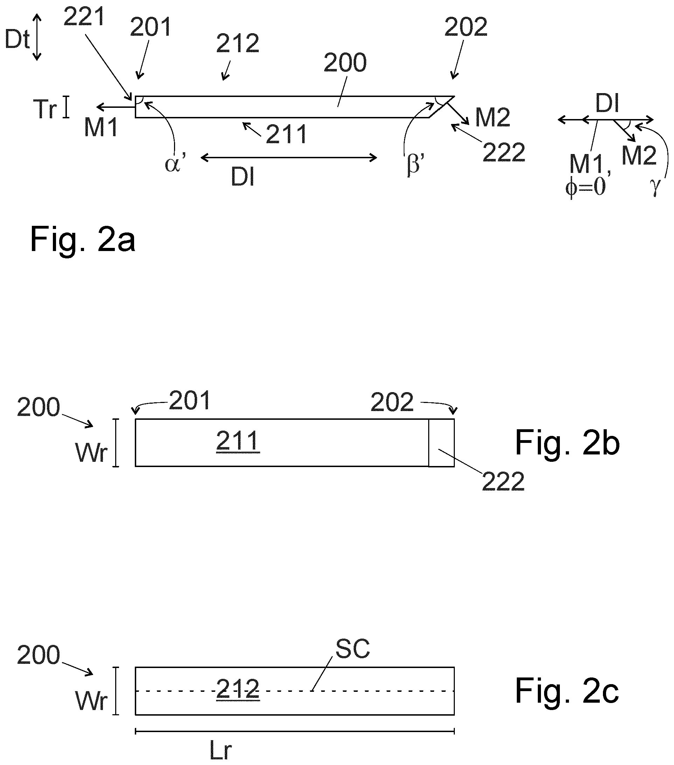

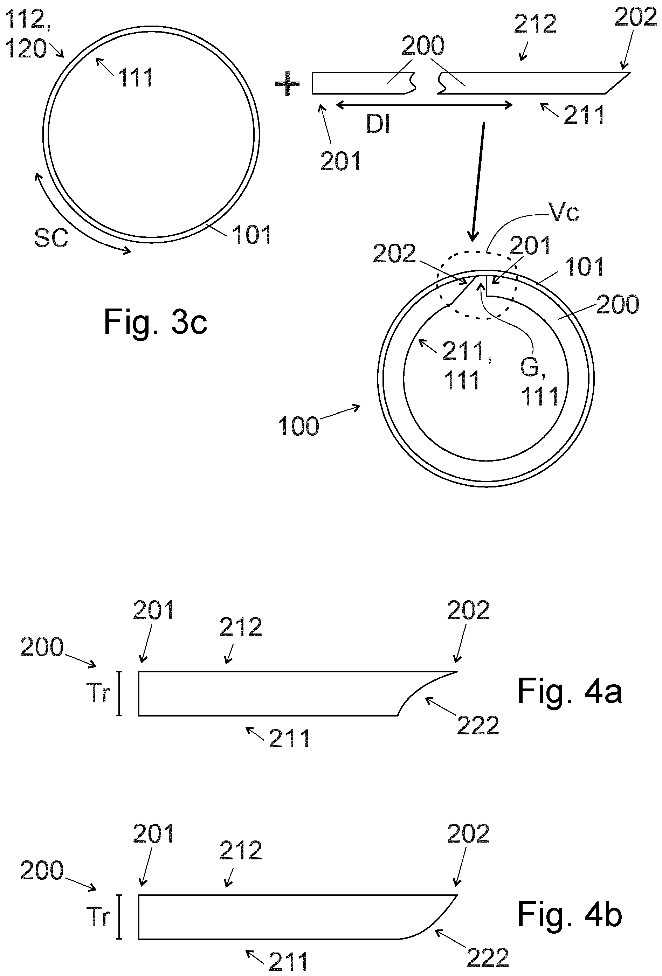

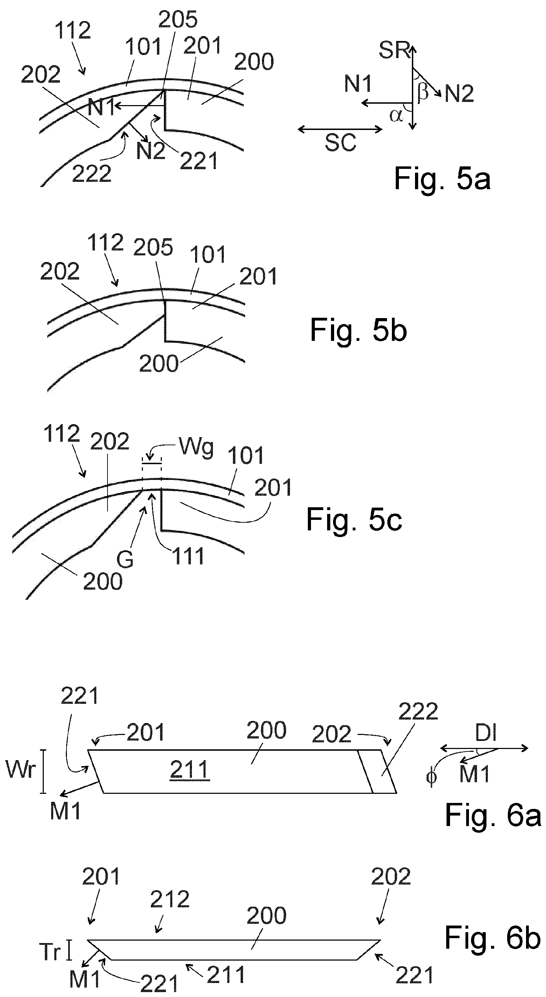

As detailed below, the tyre 100 (e.g. of Fig. 1a or 1c to 1f) has been manufactured by attaching a solid ribbon 200 of the sound-absorbing material on an inner side of a body 101 (e.g. of Fig. 1b) of the tyre 101. Such a solid ribbon 200 comprises a first end 201 and a second end 202 (see Figs. 1e, 1f, and 2a). Therefore, also in the tyre 100, the ribbon 200 comprises a first end 201 and a second end 202 as detailed in Figs. 1e, 1f, 3a, 3b, and 3c. Referring to Figs. 5a to 5c, a seam 205 remains in between the first end 201 and the second end 202. In Figs. 5a and 5b, wherein the ends 201, 202 are in contact with each other, the seam 205 is arranged in between them. In Fig. 5c, not according to the claimed invention, the ends 201, 202 are not in contact with each other, the gap G is arranged in between them. Moreover, the ribbon 200 extends from the first end 201 of the ribbon 200 to the second end 202 of the ribbon 200. In particular, the ribbon 200 extends from the first end 201 of the ribbon 200 to the second end 202 of the ribbon 200 such that only one seam is arranged in between the first end 201 and the second end 202.

As shown in Figs. 3a, 3b, 5a, and 5b, the first end 201 of the ribbon 200 is in contact with the second end 202 of the ribbon 200. This has the effect that a lot of sound-absorbing material can be arranged on the inner side of the tyre 100, because, by definition, a gap would be free from sound-absorbing material. This improves the sound-absorbing properties of the tyre 100. In these embodiments, a seam is arranged between the ends 201, 202 of the ribbon 200.

As shown in Figs. 3c and 5c, not according to the claimed invention, in an tyre, a gap G is arranged between the first end 210 of the ribbon 200 and the second end 202 of the ribbon 200. However, to improve the sound-absorbing properties of the tyre 100, a maximum width Wg of the gap G is small. Herein the maximum width Wg of the gap G is defined (i.e. measured) along the body 101 of the tyre 100. The maximum width Wg of the gap G is defined (i.e. measured) in the circumferential direction SC of the tyre 100. The maximum width Wg of the gap G is at most 5 mm. Moreover, the body 101 of the tyre 100 refers to the part of the tyre 100 to which the ribbon 200 is attached. The body 101 of the tyre 100 may comprise all other parts of the tyre 100 than the ribbon 200.

As shown in Figs. 3a to 3c and 5a to 5c, in the claimed invention, the seam 205 widens towards the rotational axis AX of the tyre 100.

However, to increase the amount of sound-absorbing material, preferably the first end 201 of the ribbon 200 is in contact with the second end 202 of the ribbon 200 (see Figs. 3a and 3b).

As indicated in Figs. 3a to 3c and 5a to 5c, and 2a, the shape of the ribbon 200 tapers such that a thickness Tr of the ribbon 200 decreases towards the second end 202 of the ribbon 200. This has the effect that on the side of the axis of rotation AX, i.e. on the side of the first main surface 211, the ends 201, 202 of the ribbon 200 do not compress each other. Therefore, even if there is a lot of sound-absorbing material in the tyre (as evidence by no gap), the ends 201, 202 of the ribbon do not compress each other on the side of the axis of rotation AX, which improves the attachment of the ribbon 200 to the tyre 100 and also reduces the ends 201, 202 of the ribbon 200 grinding each other.

Fig. 1c shows a quarter of a cross-section of a tyre 100. It also shows a radial direction SR (see Fig. 1a) and an axial direction SAX, which is parallel to the axis of rotation AX. A tubeless pneumatic tyre 100 for a vehicle comprises multiple components. A tyre 100 typically comprises an innerliner 131. Innerliner 131 refers to a layer or layers of rubber or rubber-based components. Thus, a function of the innerliner 131 is to resist air or gas diffusion, or, in other words, decrease air or gas permeability of the tyre 100.

Thus, in a preferable embodiment, the tyre comprises an innerliner 131. The innerliner may comprise butyl-rubber, such as halobutyl rubber, in particular bromobutyl rubber and/or chlorobutyl rubber. The innerliner 131 or a coating thereof may form a part of the inner surface 111 of the tyre 100.

The tyre 100, in particular the body 101 thereof, comprises a reinforcement 130. The reinforcement 130 comprises at least a first ply 127 and a first metal belt 125. Preferably, the reinforcement 130 further comprises a textile belt 123, such as a textile belt 123 comprising fibrous polyamide (e.g. Nylon, aramid, or Cordura). Preferably, the reinforcement 130 further comprises the textile belt 123, a second ply 126 and a second metal belt 124. The metal belt(s) 125, 124 is/are resilient metal belts, such as steel belts comprising wires. The ply/plies 127, 126 may comprise fibrous material, e.g. Kevlar, polyamide, carbon fibres, or glass fibres. The tread 120 comprises tread blocks made of rubber material; and it may comprise also other objects such as studs.

In addition to tread area components, the pneumatic tyre 100 (and the body 101 thereof) comprises a sidewall 132. The sidewall is typically configured to withstand flexing. A bead area of the tyre 100 may comprise, for example bead base 134 configured to seat to a rim, thereby enabling a tight sealing of the tyre 100 with the wheelrim. A bead cable 129, typically comprising metal, helps seating the bead base 134 to the rim.

The tyre 100 can be manufactured by attaching a ribbon 200 to a body 101 for a tyre 100. Thus, a method for manufacturing the tyre 100 comprises receiving the body 101 for the tyre 100. The body 101 for the tyre 100 comprises an inner surface 111 opposite an outer surface 112. The body 101 also comprises the tread 120, which is provided on a part of the outer surface 112. The body 101 for the tyre 100 may comprise other parts of the tyre 100 than the ribbon 200 and the tape or adhesive (302, 301) that is used to attach the ribbon 200 to the body 101. Thus, what has been said about the structure of the tyre 100 applies to the body 101 *mutatis mutandis.*

The body 101 for the tyre 100 may be manufactured in the way tyres without sound-absorbing material are conventionally manufactured. Examples can be found e.g. from the publication EP 3 243 644 and references cited therein. Thus, the body 101 can be manufactured. In the alternative, the body 101 may be bought. In either case, the body 101 is provided; e.g. received. The body 101 for the tyre 100 comprises rubber.

The method comprises manufacturing a ribbon 200 from sound-absorbing material. The sound-absorbing material is physically or chemically different from the material of the body 101 for the tyre 100. The sound-absorbing material may be e.g. provided as a long band on a reel, and the ribbon 200 can be cut from the band.

In general, a sound-absorbing material may have a low density. In an embodiment, a density of the material of the ribbon 200 is less than a density of the body 101 for the tyre. In an embodiment, a density of the material of the ribbon 200 is less than 30 kg/m³. The density may be more than 5 kg/m³. The sound-absorbing material may be reasonably soft. The hardness of the material is preferably from 20 N to 200 N, such as 50 to 150 N. The hardness herein refers to the hardness as defined in the standard ISO 2439 (4^{th} ed 2008-12-15), method B, and for the indentation 40 % (see section 7.4.d to 7.4.f).

In an embodiment the ribbon 200 comprises polymeric foam. Preferably, the ribbon 200 comprises polymeric foam; more preferably, the ribbon 200 consists of polymeric foam.

A matrix material of the polymeric foam is preferably selected from the group of ethylene-vinyl-acetate, polyethylene (such as LDPE and HDPE), nitrile rubber, polychloroprene, neoprene, polyimide, polypropylene (such as expanded polypropylene and polypropylene paper), polystyrene (such as expanded polystyrene, extruded polystyrene, Styrofoam, and polystyrene paper), polyurethane (such as low-resilience polyurethane, memory foam, and sorbothane), polyvinyl chloride, and silicone.

Other materials having a low density and that are suitable for use as the sound-absorbing material include aerogels, such as silica aerogels or carbon nanotube aerogels, aero graphite, metallic foams, and metallic micro lattices. Such materials that as such are hard and/or brittle may be used e.g. in the form of grains arranged in a bendable matrix material.

What has been said about the material of the ribbon 200 as such applies also to the tyre 100, of which part the ribbon 200 forms.

As for the shape of the ribbon 200 as such, i.e. in the context of the method, reference is made to Figs. 2a, 2b, and 2c. The ribbon 200 comprises a first main surface 211 and a second main surface 212. The second main surface 212 is opposite the first main surface 211. The ribbon 200 also comprises the first end 201 and the second end 202, which is opposite the first end 201.

As for the dimensions of the ribbon 200, the ribbon 200 has a length Lr, a width Wr, and a thickness Tr. These dimensions are defined in certain directions, which are mutually perpendicular, as usually. The thickness Tr is smaller than the length Lr. The width Wr is smaller than the length Lr. Normally, the thickness Tr is smaller than the width Wr. The thickness Tr is defined in a direction Dt of the thickness Tr.

The first and second main surfaces 211, 212 are defined so that the direction Dt of the thickness Tr is normal to at least a part of the first main surface 211. Moreover, the direction Dt of the thickness Tr is normal to the second main surface 212.

To reduce the compression of the ends of the ribbon 200 at an inner side of the ribbon (as discussed above in context of the tyre), the shape of the ribbon 200 is such that the ribbon 200 tapers towards the second end 202 of the ribbon in the direction Dt of the thickness Tr, as shown in Fig. 2a. Referring to Fig. 2b, in an embodiment, the shape of the ribbon 200 is such that the ribbon 200 does not taper towards the second end 202 of the ribbon in a direction of the width Wr. I.e. in an embodiment, the width Wr is constant. However, the shape of the second main surface 212 need not be rectangular. Thus, in an embodiment, only a thickness of the ribbon reduces towards the second end 202.

The method comprises attaching the second main surface 212 of the ribbon 200 on the inner surface 111 of the body 101 for the tyre 100. Referring to Figs. 3a to 3c, the second main surface 212 is attached in such a way that a central line CL of the ribbon 200 that is parallel to a direction DI of the length Lr of the ribbon 200 becomes parallel to a circumferential direction SC of the body 101 for the tyre 100.

Moreover, referring to Figs. 3a and 3b, in an embodiment, the second main surface 212 is attached in such a way that the first end 201 of the ribbon is in contact with the second end 202 of the ribbon 200. Thus, a seam 205 is formed between the ends 201, 202 of the ribbon.

In addition or alternatively, referring to Fig. 3c, in a tyre not according the invention, the second main surface 212 is attached in such a way that a gap G is arranged between the first end 201 of the ribbon 200 and the second end 202 of the ribbon 200. Even if the ends 201, 202 need not be in contact with each other, a maximum width Wg of the gap is at most 5 mm. As detailed in the context of the tyre, the maximum width Wg is measured along the inner surface 111 of the body 101 of the tyre 100. Moreover, the maximum width Wg is measured in the circumferential direction SC.

As readable from above, the ribbon 200 (unless covered by some material) forms a part of the inner surface of the tyre. However, because the body 101 does not comprise the ribbon 200, the inner surface of the body 101 is not formed by the ribbon 200. Moreover, in the method, before the tyre has been manufactured, the body 101 can be considered as being a body for the tyre. However, after the tyre has been made, that part can be considered as being a body of the tyre.

A length Lr of the ribbon 200 may be substantially equal to the circumference of the inner surface 111 of the body 101 for the tyre. First, these lengths may be equal. When these lengths are equal, the first end 201 of the ribbon contacts the second end 202 of the ribbon, whereby no gap is formed, at least not on the side of the second main surface 212 of the ribbon, as shown in Figs. 3a and 5a. However, with reference to Figs. 3a and 5a the seam widens towards the axis of rotation AX. Moreover, because the length of the ribbon equals the circumference, the ribbon 200 needs not be pressed, whereby both the ends 201, 202 of the ribbon have substantially the same shape when part of the tyre 100 as when not part thereof. In such an embodiment, the second end 202 of the ribbon is not compressed against the first end 201 of the ribbon.

Second, a length Lr of the ribbon 200 may be slightly more than the circumference of the inner surface 111 of the body 101 for the tyre. Also in this case the first end 201 of the ribbon contacts the second end 202 of the ribbon, whereby no gap is formed, at least not on the side of the second main surface 212 of the ribbon, as shown in Figs. 3b and 5b. However, with reference to Figs. 3b and 5b the seam widens towards the axis of rotation AX. Moreover, because of the difference in the lengths, the ends 201, 202 are being pressed to each other. In such an embodiment, at least a part of the second end 202 of the ribbon is compressed against the first end 201 of the ribbon. A corresponding embodiment of the method comprises compressing at least a part of the second end 202 of the ribbon against the first end 201 of the ribbon when attaching the ribbon to the body 101 of the tyre 100. For example, the length Lr of the ribbon 200 may be greater than a circumference of the body 101 for the tyre 100. The circumference of the body 101 for the tyre 100 is defined on a central line of the inner surface 111 of the body 101 for the tyre 100. For example, the length Lr of the ribbon may be 0.5 to 5 mm greater than the circumference of the body for the tyre 101.

Even if there is a seam between the ends 201, 202 of the ribbon 200, as in Figs. 3a and 3b, preferably, the first end 201 of the ribbon 200 is not attached directly to the second end 202 of the ribbon 200 with adhesive or tape. Naturally both the ends 201, 202 are attached to the body 101 of the tyre 100. Correspondingly, preferably, [a] neither adhesive nor tape is arranged between the first end 201 of the ribbon 200 and the second end 202 of the ribbon 200 (as in Figs. 3a and 3b) or [b] adhesive or tape is arranged between the first end 201 of the ribbon 200 and the second end 202 of the ribbon 200 only on the inner surface of the body 101 of the tyre (as the case may be in Fig. 3c).

In particular, in an embodiment, the ribbon 200 comprises a first end surface 221 and a second end surface 222, and neither adhesive not tape is provided on either of the first end surface 221 and the second end surface 222. These end surfaces 221, 222 will be defined in more detail later. Having these end surfaces 221, 222 free of adhesive and tape has the benefit that the tyre 100 is easier to manufacture. It suffices to provide adhesive or tape on one of: [i] the inner surface 111 of the body 101 for the tyre or [ii] the first main surface 212 of the ribbon 200. Such a process can be automated much more easily than one wherein adhesive is provided also on an end surface 221, 222 to join the end surfaces together.

An embodiment of the method comprises attaching the second main surface 212 of the ribbon 200 to the inner surface 111 of the body 101 for the tyre using adhesive 301 and/or tape 302, such as double-sided tape. A tyre 100 made in such a way comprises adhesive 301 and/or tape 302, by which the ribbon 200 has been attached to the body 101 of the tyre 100. A tape comprises carrier material and adhesive on at least one side of the carrier. Double-sided tape comprises the carrier material and adhesive on both sides of the carrier. The adhesive or the tape made be applied in the form of stripes. Such stripes may extend e.g. on an inner surface 111 of the body 101 for the tire in the circumferential direction SC. Such stripes may extend e.g. on the second main surface 212 of the ribbon in the longitudinal direction DI.

Referring to Fig. 2a, in an embodiment, the ribbon 200 does not taper towards the first end 201. Thus, in an embodiment, the shape of the ribbon 200 is non-tapering towards the first end 201 of the ribbon 200. In other words, in this embodiment, the thickness of the ribbon does not decrease towards the first end 201. Moreover, in this embodiment, the width of the ribbon does not decrease towards the first end 201.

Referring to Fig. 2a, the shape of the first end 201 of the ribbon 200 defines a first angle of inclination α'. The first angle of inclination α' may be e.g. 90 degrees, e.g. in the case the first end 201 is not tapering. However, as shown in Fig. 6b, in an embodiment, the shape of the ribbon 200 is tapering also towards the first end 201 of the ribbon 200. In such a case, the first angle of inclination α' is less than 90 degrees. Preferably, the first angle of inclination α' is at least 30 degrees, more preferably at least 80 degrees, such as 90 degrees. The first angle of inclination α' herein refers to a minimum angle between the two planes defined by the first end surface 221 (which preferably is planar) and the second main surface 212 (which preferably is planar).

Referring to Fig. 2a, because the ribbon 200 tapers at least towards the second end 202, a second angle of inclination β' is formed at the second end 202. The second angle of inclination β' is less than 90 degrees and may be e.g. at most 75 degrees. Preferably, the second angle of inclination β' is 30 to 60 degrees, e.g. about 45 degrees, such as 40 to 50 degrees. The second angle of inclination β' herein refers to a minimum angle between the two planes defined by the second end surface 222 (which preferably is planar) and the second main surface 212 (which preferably is planar).

Referring to Figs. 1e and 1f, it is noted that in the tire 100 the seam 205 extends from one side of the ribbon 200 to another, opposite side of the ribbon 200, and it/they extend/extends in a first direction Ds in this way. Within this description the term "direction" refers to two directions that are reverse to each other.

Most preferably, the first direction Ds is parallel to an axial direction SAX of the tyre 100 as in Fig. 1f. The axial direction SAX is a direction that is parallel to the axis of rotation AX. The first direction Ds need not be parallel to an axial direction SAX, as in Fig. 1e. However, in an embodiment, the first direction Ds or forms a third minimum angle δ of at most 15 degrees with the axial direction SAX of the tyre 100. The term "minimum angle" is used, because, when a direction refers to two reverse directions, two directions form four angles, of which at most two are different, and the smaller of these is referred to here, unless there is only the one straight angle, which then is the minimum angle. This applies to also other angles that will be discussed.

When the first direction Ds is parallel to an axial direction SAX of the tyre 100, in the method, the second main surface 212 is rectangular. In the context of the method, this is preferable. Reference is made to Fig. 2c. However, since the third minimum angle δ needs not be zero, the second main surface 212 needs not be rectangular, as readable from in Fig. 6a (note that the second main surface 212 remains opposite the first main surface 211 shown in Fig. 6a). In an embodiment of the method, the second main surface 212 of the ribbon is quadrangular such that each angle is 75 to 105 degrees (in line with the third minimum angle δ). As readable from Fig. 6a, when the third minimum angle δ is not zero, a third normal M1 (see Fig. 2a) is not parallel to the direction DI of length (as evidenced by the fourth minimum angle ϕ), even if the first angle of inclination α' is 90 degrees.

A small third minimum angle δ (e.g. zero) has the effect that the seam remains short, whereby the inclined second end 202 takes up less space that in case the third minimum angle δ would be larger. Thus, this is beneficial from the point of view of suppressing noise of the tyre. Fig. 1e shows an embodiment, wherein the third minimum angle δ is small but not zero, and Fig. 1f shows a preferable embodiment, wherein the third minimum angle δ is zero.

The first angle of inclination α' and the second angle of inclination β' relate to some other angles, too, observable from the tyre 100 and/or the ribbon 200.

Concerning first the tyre 100 and with reference to Fig. 5a (and Figs. 3a and 2a) the first end 201 of the ribbon 200 having the first angle of inclination α' also has a first end surface 221. Thus, in an embodiment, the ribbon 200 (as such or as part of the tyre 100) comprises a first end surface 221 at the first end 201. In a similar way the second end 202 of the ribbon 200 having the second angle of inclination β' also has a second end surface 222. Thus, in an embodiment, the ribbon 200 (as such or as part of the tyre 100) comprises a second end surface 222 at the first end 202. In the embodiments of Figs. 5b and 5c the ribbon 200 comprises such first and second end surfaces, even if not shown in those figures by a reference numeral.

Referring to Fig. 5a, in an embodiment, a first normal N1 of the whole first end surface 221 is perpendicular to a radial direction SR of the tyre at the location of the first normal N1. In other words, the in an embodiment, a first normal N1 the whole first end surface 221 is parallel to a circumferential direction SC of the tyre at the location of the first normal N1 (i.e. at a location of the body 101 of the tire, the location of the body 101 being arranged on a same radial line as the point at which the first normal N1 is defined). Herein the term parallel covers the options of being unidirectional or being reverse.

In Fig. 5a, the first normal N1 is normal to the whole first end surface 221, because the first end surface 221 is planar. In a preferable embodiment, the first end surface 221 is planar. This is beneficial from manufacturing point of view, because then the ribbon 200 can simply be cut from a band. However, only a part of the first end surface 221 may be planar. Moreover, the first end surface 221 needs not be planar. Thus, in an embodiment, a first normal N1 of a part of the first end surface 221 is perpendicular to a radial direction SR of the tyre at the location of the first normal N1. In other words, in an embodiment, a first normal N1 of a part of the first end surface 221 is parallel to a circumferential direction SC of the tyre at the location of the first normal N1.

However, as detailed above, the first angle of inclination α' need not be 90 degrees (see e.g. Fig. 6b), whereby the first normal N1 needs not be parallel to the circumferential direction SC or perpendicular to the radial direction SR.

In an embodiment, a first normal N1 of the whole first end surface 221 or a part of the first end surface 221 forms a first minimum angle α of at least 30 degrees, preferably at least 60 degrees, most preferably at least 80 degrees, with a radial direction SR of the tyre. Herein the radial direction is defined at that location (or radially outward, as indicated above). Reference is made to Fig. 5a. The term minimum angle is used, because both the first normal N1 and the radial direction SR are considered to be definable in two opposite directions resulting at most two different angles. Correspondingly, in an embodiment, a first normal N1 of the whole first end surface 221 or a part of the first end surface 221 forms a minimum angle of at most 60 degrees, preferably at most 30 degrees, most preferably at most 10 degrees, to a to a circumferential direction SC of the tyre at the location of the first normal N1. Thus, the first angle of inclination α' may be e.g. at least 30 degrees, at least 60 degrees, or at least 80 degrees, such as 90 degrees. Correspondingly, the third minimum angle δ may be e.g. at most 10 degrees; and the second main surface 212 of the ribbon may be quadrangular such that each angle is 80 to 100 degrees.

Referring to Fig. 5a, in an embodiment, a second normal N2 of the whole second end surface 222 forms a second minimum angle β of 30 to 60 degrees with a radial direction SR of the tyre, wherein the radial direction SR is defined at the location of the second normal N2 (i.e. at a location of the body 101 of the tire, the location of the body 101 being arranged on a same radial line as the point at which the second normal N2 is defined). Reference is made to Fig. 5a with the note that the curvature of the body 101 is highly exaggerated. Thus, in an embodiment, the second normal N2 of the whole second end surface 222 forms a minimum angle of least 30 degrees with a circumferential direction SC of the tyre at the location of the second normal N2. Thus, the second angle of inclination β' may be e.g. at most 60 degrees.

In an embodiment, the second minimum angle β is 30 to 60 degrees, and more preferably 40 to 50 degrees, such as 45 degrees. The upper limit relates to a sufficient amount of tapering in view of e.g. reducing the wear problems at the ends 201, 202 of the ribbon, and the lower limit ensures sufficient mass balance and amount of sound-absorbing material.

The second surface normal N2 is a normal of the whole the second end surface 222 when the second end surface 222 is planar. In a preferably embodiment, the second end surface 222 is planar. In an embodiment, at least the part of the second end surface 222 is planar. However, the second end surface 222 needs not be planar. Thus, in an embodiment, a second normal N2 of a part of the second end surface 222 forms the second minimum angle β with the radial direction SR, the value of the second minimum angle β being discussed in detail above.

These values of the first minimum angle α and the second minimum angle β apply particularly when the third minimum angle δ is small in the meaning discussed above.

As for the shape of the first end surface 221 and the second end surface 222, Figs. 4a and 4b show embodiment wherein the second end surface 222 is not planar. However, as conventional, a normal (e.g. the second normal N2 discussed above) of such a surface is definable as a normal of a tangential plane of the surface.

However, as detailed above, preferably the first angle of inclination α' is about 90 degrees, the second angle of inclination β' is about 45 degrees, and the third minimum angle δ is small (e.g. less than 15 degrees). How these relate to the tire, particularly the first and second minimum angles α and β was discussed above.

The preferable values for the first angle of inclination α' and the second angle of inclination β' are observable also from the ribbon 200 as such (i.e. in the context of method, before the ribbon 200 has been attached to the body 101 of the tyre). In an embodiment, the ribbon 200 comprises a first end surface 221 at the first end 201 of the ribbon 200 and a second end surface 222 at the second end 202 of the ribbon 200.

Concerning the first angle of inclination α', in more specific terms, in an embodiment of the method the direction DI of the length Lr of the ribbon 200 is parallel or forms a fourth minimum angle ϕ of at most 60 degrees with a third normal M1, the third normal M1 being a normal of a part of the first end surface 221 or a normal of the whole first end surface 221. The fourth minimum angle ϕ is shown in Figs. 2a and 6a. Even if not shown, clearly also in the embodiment of Fig. 6b, the fourth minimum angle ϕ is greater than zero. Preferably, the first end surface 221 is planar, and the third normal M1 is a normal of the whole first end surface 221. More preferably, the direction DI of the length Lr of the ribbon 200 is parallel or forms the fourth minimum angle ϕ of at most 30, such as at most 10 degrees, with the third normal M1 of a part of the first end surface 221 or the third normal M1 of the whole first end surface 221. It is noted that both the first angle of inclination α' and the third minimum angle δ affect the fourth minimum angle ϕ defined above. Correspondingly, the third minimum angle δ may be e.g. at most 10 degrees; and the second main surface 212 of the ribbon may be quadrangular such that each angle is 80 to 100 degrees.

Concerning the second angle of inclination β', in more specific terms, in an embodiment of the method the direction DI of the length Lr of the ribbon 200 forms a fifth minimum angle γ of at least 15 degrees with a fourth normal M2 of a part of the second end surface 222 or the whole second end surface 222. Reference is made to Fig. 2a. Preferably the second end surface 222 is planar and the fourth normal M2 is a normal of the whole second end surface 222. The lower limit for the fifth minimum angle γ ensures sufficient tapering.

In an embodiment, the direction DI of the length Lr of the ribbon 200 forms the fifth minimum angle γ of 30 to 60 degrees, more preferably 40 to 50 degrees, with the fourth normal M2; which is a normal of a part of the second end surface 222 or a normal of the whole second end surface 222. The upper limit for the fifth minimum angle γ ensures sufficient length of non-tapering part, which affect both sound-suppressing properties and mass balance of the tire.

As detailed above, most preferably the first angle of inclination α' is 90 degrees, the second angle of inclination β' is 45 degrees and the third minimum angle δ is zero degrees. Thereby, in that embodiment, the first minimum angle α is 90 degrees, the second minimum angle β is 45 degrees, the fourth minimum angle ϕ is zero, and the fifth minimum angle γ is 45 degrees.

In an embodiment a thickness Tr of the ribbon 200 is 10 mm to 75 mm, preferably 20 mm to 60 mm, more preferably 30 mm to 50 mm. In particular, these values of thickness apply to the non-tapering part of the ribbon 200. Given that the second angle of inclination β' may be e.g. 45 degrees and that a radius of a tyre is typically at least 30 cm (making a circumference of the inner surface 111 about 190 cm), obviously a major portion of the ribbon 200 has a constant thickness. In an embodiment, the ribbon 200 has a constant thickness within an area of the second main surface 222, the area being at least 80 % of the area of the second main surface 222. The constant thickness within this area may be within the limits disclosed above for the thickness. Naturally, within the tapering part of the ribbon 200, the thickness may be less, and may decrease continuously to zero.

Referring to Fig. 1d, in an embodiment, the width Wr of the ribbon 200 is proportional to a width of the tyre 100 and/or the body 101 of the tyre. In an embodiment, the width Wr of the ribbon 200 is at least ¼ (i.e. at least 25 %) of a width W111 of a normal projection of the inner surface 111 to a plane comprising a rotational axis AX of the body 101 of the tyre 100. Fig. 1d does not show such a plane; however, an axial direction SAX is depicted therein, and the rotational axis AX is parallel to the axial direction SAX. Moreover, because the aforementioned projection is a normal projection, the widths W111 is independent of how far away the plane is from the inner surface 111. In any case, the width W111 is depicted in Fig. 1d as well as the width Wr of the ribbon 200. Preferably, the width Wr of the ribbon 200 is at least 1/3 (i.e. at least 33 %) of the width W111 of the normal projection of the inner surface 111 to the plane comprising a rotational axis AX of the body 101 of the tyre 100.

## Claims

1. A tyre (100) comprising
- an inner surface (111) opposite an outer surface (112),
- a tread (120) forming a part of the outer surface (112), and
- a ribbon (200) comprising sound-absorbing material such that
- at least a part of the ribbon (200) is arranged opposite the tread (120),
- the ribbon (200) extends from a first end (201) of the ribbon to a second end (202) of the ribbon,
- the shape of the ribbon (200) tapers such that a thickness (Tr) of the ribbon (200) decreases towards the second end (202) of the ribbon, and
- the first end (201) of the ribbon is in contact with the second end (202) of the ribbon, wherein
- a seam (205) is arranged between the first end (201) of the ribbon (200) and the second end (202) of the ribbon (200),
- the ribbon (200) comprises a first end surface (221) at the first end (201) and a second end surface (222) at the second end (202), and
- a first normal (N1) of a part of the first end surface (221) or the whole first end surface (221) is perpendicular to a radial direction (SR) of the tyre or forms a first minimum angle (α) of at least 80 degrees with a radial direction (SR) of the tyre,
**characterized in that**
- a second normal (N2) of the part of the second end surface (222) or the second normal (N2) of the whole second end surface (222) forms a second minimum angle (β) of 30 to 60 degrees with a radial direction (SR) of the tyre,
- the seam (205) widens towards the rotational axis (AX) of the tyre (100), and
- at least a part of the second end (202) of the ribbon is compressed against the first end (201) of the ribbon.

2. The tyre (100) of claim 1, wherein
- the part of the second end surface (222) is planar or the whole second end surface (222) is planar.

3. The tyre (100) of claim 2, wherein
- [A] the part of the second end surface (222) is planar or the whole second end surface (222) is planar and [B] the part of the first end surface (221) is planar or the whole first end surface (221) is planar;
preferably,
- the whole second end surface (222) is planar and the whole first end surface (221) is planar.

4. The tyre (100) of any of the claims 1 to 3, wherein
- the seam (205) extends in a first direction (Ds), and
- the first direction (Ds) is parallel to an axial direction (SAX) of the tyre (100) or forms a third minimum angle (δ) of at most 15 degrees with the axial direction (SAX) of the tyre (100).

5. The tyre (100) of any of the claims 1 to 4, comprising
- adhesive (301) and/or tape (302), by which the ribbon (200) has been attached to the body (101) of the tyre (100).

6. A method for manufacturing a tyre (100), the method comprising
- providing a body (101) for the tyre (100), the body (101) for the tyre (100) comprising
• an inner surface (111) opposite an outer surface (112) and
• a tread (120) provided on a part of the outer surface (112),
- manufacturing a ribbon (200) from sound-absorbing material, the ribbon (200) comprising
• a first main surface (211), a second main surface (212) opposite the first main surface (211),
• a first end (201), a second end (202) opposite the first end (201),
• a length (Lr), a width (Wr), and a thickness (Tr), wherein
• a direction (Dt) of the thickness (Tr) is normal to at least a part of the first main surface (211) and normal to at least a part of the second main surface (212),
• the ribbon (200) tapers towards the second end (202) of the ribbon in the direction (Dt) of the thickness (Tr), and
- attaching the second main surface (212) on the inner surface (111) of the body (101) for the tyre (100) such that
• a central line (CL) of the ribbon (200) that is parallel to a direction (DI) of the length (Lr) of the ribbon (200) becomes parallel to a circumferential direction (SC) of the body (101) for the tyre (100) and
• the first end (201) of the ribbon is in contact with the second end (202) of the ribbon (200), wherein
- the ribbon (200) comprises a first end surface (221) at the first end (201) and a second end surface (222) at the second end (202), and
- the direction (DI) of the length (Lr) of the ribbon (200) is parallel or forms a fourth minimum angle (ϕ) of at most 10 degrees with a third normal (M1) of a part of the first end surface (221) or the whole first end surface (221),
**characterized in that**
- the direction (DI) of the length (Lr) of the ribbon (200) forms a fifth minimum angle (γ) of 30 to 60 degrees with the fourth normal (M2) of a part of the second end surface (222) or the fourth normal (M2) of the whole second end surface (222), and **in that** the method comprises
- compressing at least a part of the second end (202) of the ribbon against the first end (201) of the ribbon when attaching the ribbon to the body (101) of the tyre (100).

7. The method of claim 6, wherein
- the whole second end surface (222) is planar;
preferably,
- the whole second end surface (222) is planar and the whole first end surface (221) is planar.

8. The method of the claim 6 or 7, wherein
- the length (Lr) of the ribbon (200) is greater or equal to a circumference of the body (101) for the tyre (100), wherein
- the circumference of the body (101) for the tyre (100) is defined on a central line of the inner surface (111) of the body (101) for the tyre (100);
preferably,
- the length (Lr) of the ribbon is 0.5 to 5 mm greater than the circumference of the body for the tyre (101).

9. The method of any of the claims 6 to 8, comprising
- attaching the second main surface (212) of the ribbon (200) to the inner surface (111) of the body (101) for the tyre using adhesive (301) and/or tape (302), such as double-sided tape.

10. The method of any of the claims 6 to 9 or the tyre (100) of any of the claims 1 to 5, wherein
- the shape of the ribbon (200) is non-tapering towards the first end (201) of the ribbon (200) at least in the direction of thickness of the ribbon;
preferably also
- the shape of the ribbon (200) is, in a direction of the width of the ribbon, non-tapering towards the second end (202) of the ribbon (200) and
- the shape of the ribbon (200) is, in a direction of the width of the ribbon, non-tapering towards the first end (201) of the ribbon (200).

11. The method of any of the claims 6 to 10 or the tyre (100) of any of the claims 1 to 5 or 10, wherein
- the body (101) of the tyre (100) comprises rubber and
- [i] a density of the material of the ribbon (200) is less than 30 kg/m³ and/or [ii] the ribbon (200) comprises polymeric foam;
preferably,
- the ribbon (200) comprises polymeric foam or consists of polymeric foam; more preferably,
- the ribbon comprises polymeric foam or consists of polymeric foam, wherein a polymer matrix material of the polymeric foam is selected from the group of ethylene-vinyl-acetate, polyethylene (such as LDPE and HDPE), nitrile rubber, polychloroprene, neoprene, polyimide, polypropylene (such as expanded polypropylene and polypropylene paper), polystyrene (such as expanded polystyrene, extruded polystyrene, Styrofoam, and polystyrene paper), polyurethane (such as low-resilience polyurethane, memory foam, and sorbothane), polyvinyl chloride, and silicone.

12. The method of any of the claims 6 to 11 or the tyre of any of the claims 1 to 5 or 10 or 11, wherein
- a thickness (Tr) of the ribbon (200) is 10 mm to 75 mm, preferably 20 mm to 60 mm, more preferably 30 mm to 50 mm.

13. The method of any of the claims 6 to 12 or the tyre of any of the claims 1 to 5 or 10 to 12, wherein
- a width (Wr) of the ribbon (200) is at least 1/4, preferably at least 1/3, of a width (W111) of a normal projection of the inner surface (111) to a plane comprising a rotational axis (AX) of the body (101) of the tyre (100).

## Patentansprüche

1. Reifen (100) umfassend
- eine Innenfläche (111) gegenüber einer Außenfläche (112),
- eine Lauffläche (120), die einen Teil der Außenfläche (112) bildet, und
- ein Band (200) aus schallabsorbierendem Material, so dass
- zumindest ein Teil des Bandes (200) gegenüber der Lauffläche (120) angeordnet ist,
- sich das Band (200) von einem ersten Ende (201) des Bandes zu einem zweiten Ende (202) des Bandes erstreckt,
- sich die Form des Bandes (200) derart verjüngt, dass eine Dicke (Tr) des Bandes (200) zum zweiten Ende (202) des Bandes hin abnimmt, und
- das erste Ende (201) des Bandes mit dem zweiten Ende (202) des Bandes in Kontakt steht, wobei
- zwischen dem ersten Ende (201) des Bandes (200) und dem zweiten Ende (202) des Bandes (200) eine Naht (205) angeordnet ist,
- das Band (200) am ersten Ende (201) eine erste Stirnfläche (221) und am zweiten Ende (202) eine zweite Stirnfläche (222) aufweist, und
- eine erste Normale (N1) eines Teils der ersten Endfläche (221) oder der gesamten ersten Endfläche (221) senkrecht zu einer radialen Richtung (SR) des Reifens steht oder einen ersten Mindestwinkel (α) von mindestens 80 Grad mit einer radialen Richtung (SR) des Reifens bildet,
**dadurch gekennzeichnet, dass**
- eine zweite Normale (N2) des Teils der zweiten Endfläche (222) oder die zweite Normale (N2) der gesamten zweiten Endfläche (222) mit einer radialen Richtung (SR) des Reifens einen zweiten Mindestwinkel (β) von 30 bis 60 Grad bildet,
- sich die Naht (205) in Richtung der Rotationsachse (AX) des Reifens (100) erweitert, und
- zumindest ein Teil des zweiten Endes (202) des Bandes gegen das erste Ende (201) des Bandes gedrückt wird.

2. Reifen (100) nach Anspruch 1, wobei
- der Teil der zweiten Endfläche (222) eben ist oder die gesamte zweite Endfläche (222) eben ist.

3. Reifen (100) nach Anspruch 2, wobei
- [A] der Teil der zweiten Endfläche (222) planar ist oder die gesamte zweite Endfläche (222) planar ist und [B] der Teil der ersten Endfläche (221) planar ist oder die gesamte erste Endfläche (221) planar ist;
vorzugsweise
- die gesamte zweite Endfläche (222) eben ist und die gesamte erste Endfläche (221) eben ist.

4. Reifen (100) nach einem der Ansprüche 1 bis 3, wobei
- die Naht (205) in einer ersten Richtung (Ds) verläuft, und
- die erste Richtung (Ds) parallel zu einer axialen Richtung (SAX) des Reifens (100) ist oder einen dritten Mindestwinkel (δ) von höchstens 15 Grad mit der axialen Richtung (SAX) des Reifens (100) bildet.

5. Reifen (100) nach einem der Ansprüche 1 bis 4, umfassend
- Klebstoff (301) und/oder Klebeband (302), mit dem das Band (200) an der Karosserie (101) des Reifens (100) befestigt wurde.

6. Verfahren zur Herstellung eines Reifens (100), wobei das Verfahren Folgendes umfasst
- Bereitstellen eines Körpers (101) für den Reifen (100), wobei der Körper (101) für den Reifen (100) Folgendes umfasst
• eine Innenfläche (111) gegenüber einer Außenfläche (112) und
• eine Lauffläche (120), die auf einem Teil der Außenfläche (112) vorgesehen ist,
- Herstellen eines Bandes (200) aus schallabsorbierendem Material, wobei das Band (200) Folgendes umfasst
• eine erste Hauptfläche (211), eine der ersten Hauptfläche (211) gegenüberliegende zweite Hauptfläche (212),
• ein erstes Ende (201), ein dem ersten Ende (201) gegenüberliegendes zweites Ende (202),
• eine Länge (Lr), eine Breite (Wr) und eine Dicke (Tr), wobei
• eine Richtung (Dt) der Dicke (Tr) normal zu mindestens einem Teil der ersten Hauptfläche (211) und normal zu mindestens einem Teil der zweiten Hauptfläche (212) ist,
• sich das Band (200) zum zweiten Ende (202) des Bandes hin in Richtung (Dt) der Dicke (Tr) verjüngt, und
- Anbringen der zweiten Hauptfläche (212) an der Innenfläche (111) des Körpers (101) für den Reifen (100), so dass
• eine Mittellinie (CL) des Bandes (200), die parallel zu einer Richtung (Dl) der Länge (Lr) des Bandes (200) ist, parallel zu einer Umfangsrichtung (SC) des Körpers (101) für den Reifen (100) wird und
• das erste Ende (201) des Bandes mit dem zweiten Ende (202) des Bandes (200) in Kontakt steht, wobei
- das Band (200) am ersten Ende (201) eine erste Stirnfläche (221) und am zweiten Ende (202) eine zweite Stirnfläche (222) aufweist, und
- die Richtung (DI) der Länge (Lr) des Bandes (200) parallel ist oder einen vierten Mindestwinkel (φ) von höchstens 10 Grad mit einer dritten Normalen (M1) eines Teils der ersten Endfläche (221) oder der gesamten ersten Endfläche (221) bildet,
**dadurch gekennzeichnet, dass**
- die Richtung (DI) der Länge (Lr) des Bandes (200) einen fünften Mindestwinkel (γ) von 30 bis 60 Grad mit der vierten Normalen (M2) eines Teils der zweiten Endfläche (222) oder der vierten Normalen (M2) der gesamten zweiten Endfläche (222) bildet, und dass das Verfahren Folgendes umfasst
- Zusammendrücken von zumindest einem Teil des zweiten Endes (202) des Bandes gegen das erste Ende (201) des Bandes beim Befestigen des Bandes am Körper (101) des Reifens (100).

7. Verfahren nach Anspruch 6, wobei
- die gesamte zweite Stirnfläche (222) eben ist; vorzugsweise
- die gesamte zweite Endfläche (222) eben ist und die gesamte erste Endfläche (221) eben ist.

8. Verfahren nach Anspruch 6 oder 7, wobei
- die Länge (Lr) des Bandes (200) größer oder gleich einem Umfang des Körpers (101) für den Reifen (100) ist, wobei
- der Umfang des Körpers (101) für den Reifen (100) auf einer Mittellinie der Innenfläche (111) des Körpers (101) für den Reifen (100) definiert ist;
vorzugsweise,
- die Länge (Lr) des Bandes 0,5 bis 5 mm größer als der Umfang des Reifenkörpers (101) ist.

9. Verfahren nach einem der Ansprüche 6 bis 8, umfassend
- Befestigen der zweiten Hauptfläche (212) des Bandes (200) an der Innenfläche (111) des Körpers (101) für den Reifen unter Verwendung von Klebstoff (301) und/oder Klebeband (302), beispielsweise doppelseitigem Klebeband.

10. Verfahren nach einem der Ansprüche 6 bis 9 oder der Reifen (100) nach einem der Ansprüche 1 bis 5, wobei
- die Form des Bandes (200) zum ersten Ende (201) des Bandes (200) hin zumindest in Dickenrichtung des Bandes nicht verjüngend ist;
vorzugsweise auch
- die Form des Bandes (200) in Richtung der Breite des Bandes zum zweiten Ende (202) des Bandes (200) hin nicht verjüngend ist und
- die Form des Bandes (200) in einer Richtung der Breite des Bandes zum ersten Ende (201) des Bandes (200) hin nicht verjüngend ist.

11. Verfahren nach einem der Ansprüche 6 bis 10 oder der Reifen (100) nach einem der Ansprüche 1 bis 5 oder 10, wobei
- der Körper (101) des Reifens (100) Gummi umfasst und
- [i] eine Dichte des Materials des Bandes (200) weniger als 30 kg/m³ beträgt und/oder [ii] das Band (200) Polymerschaum umfasst;
vorzugsweise,
- das Band (200) Polymerschaum umfasst oder aus Polymerschaum besteht;
noch bevorzugter,
- das Band Polymerschaum umfasst oder aus Polymerschaum besteht, wobei ein Polymermatrixmaterial des Polymerschaums aus der Gruppe ausgewählt ist, die aus Ethylenvinylacetat, Polyethylen (wie LDPE und HDPE), Nitrilkautschuk, Polychloropren, Neopren, Polyimid, Polypropylen (wie expandiertes Polypropylen und Polypropylenpapier), Polystyrol (wie expandiertes Polystyrol, extrudiertes Polystyrol, Styropor und Polystyrolpapier), Polyurethan (wie Polyurethan mit geringer Elastizität, Memory-Schaum und Sorbothan), Polyvinylchlorid und Silikon besteht.

12. Verfahren nach einem der Ansprüche 6 bis 11 oder der Reifen nach einem der Ansprüche 1 bis 5 oder 10 oder 11, wobei
- eine Dicke (Tr) des Bandes (200) 10 mm bis 75 mm, vorzugsweise 20 mm bis 60 mm, besonders bevorzugt 30 mm bis 50 mm beträgt.

13. Verfahren nach einem der Ansprüche 6 bis 12 oder der Reifen nach einem der Ansprüche 1 bis 5 oder 10 bis 12, wobei
- eine Breite (Wr) des Bandes (200) mindestens 1/4, vorzugsweise mindestens 1/3 einer Breite (W111) einer Normalprojektion der Innenfläche (111) auf eine Ebene beträgt, die eine Rotationsachse (AX) des Körpers (101) des Reifens (100) umfasst.

## Revendications

1. Pneumatique (100) comprenant
- une surface intérieure (111) opposée à une surface extérieure (112),
- une bande de roulement (120) formant une partie de la surface extérieure (112), et
- un ruban (200) comprenant un matériau insonorisant de telle sorte
- qu'au moins une partie du ruban (200) est disposée à l'opposé de la bande de roulement (120),
- que le ruban (200) s'étend d'une première extrémité (201) du ruban à une seconde extrémité (202) du ruban,
- que la forme du ruban (200) s'effile de telle sorte qu'une épaisseur (Tr) du ruban (200) diminue vers la seconde extrémité (202) du ruban, et
- que la première extrémité (201) du ruban est en contact avec la seconde extrémité (202) du ruban, dans lequel
- une couture (205) est disposée entre la première extrémité (201) du ruban (200) et la seconde extrémité (202) du ruban (200),
- le ruban (200) comprend une première surface d'extrémité (221) à la première extrémité (201) et une seconde surface d'extrémité (222) à la seconde extrémité (202), et
- une première normale (N1) d'une partie de la première surface d'extrémité (221) ou de la totalité de la première surface d'extrémité (221) est perpendiculaire à une direction radiale (SR) du pneumatique ou forme un premier angle minimum (α) d'au moins 80 degrés avec une direction radiale (SR) du pneumatique,
**caractérisé en ce**
- **qu'**une deuxième normale (N2) de la partie de la seconde surface d'extrémité (222) ou la deuxième normale (N2) de la totalité de la seconde surface d'extrémité (222) forme un deuxième angle minimum (β) de 30 à 60 degrés avec une direction radiale (SR) du pneumatique,
- **que** la couture (205) s'élargit vers l'axe de rotation (AX) du pneumatique (100), et
- **qu'**au moins une partie de la seconde extrémité (202) du ruban est comprimée contre la première extrémité (201) du ruban.

2. Pneumatique (100) selon la revendication 1, dans lequel
- la partie de la seconde surface d'extrémité (222) est plane ou la totalité de la seconde surface d'extrémité (222) est plane.

3. Pneumatique (100) selon la revendication 2, dans lequel
- [A] la partie de la seconde surface d'extrémité (222) est plane ou la totalité de la seconde surface d'extrémité (222) est plane et [B] la partie de la première surface d'extrémité (221) est plane ou la totalité de la première surface d'extrémité (221) est plane ;
de préférence,
- la totalité de la seconde surface d'extrémité (222) est plane et la totalité de la première surface d'extrémité (221) est plane.

4. Pneumatique (100) selon l'une quelconque des revendications 1 à 3, dans lequel
- la couture (205) s'étend dans une première direction (Ds), et
- la première direction (Ds) est parallèle à une direction axiale (SAX) du pneumatique (100) ou forme un troisième angle minimum (δ) d'au plus 15 degrés avec la direction axiale (SAX) du pneumatique (100).

5. Pneumatique (100) selon l'une quelconque des revendications 1 à 4, comprenant
- un adhésif (301) et/ou ruban adhésif (302), par lesquels le ruban (200) a été fixé au corps (101) du pneumatique (100).

6. Procédé de fabrication d'un pneumatique (100), le procédé comprenant
- la fourniture d'un corps (101) du pneumatique (100), le corps (101) du pneumatique (100) comprenant
• une surface intérieure (111) opposée à une surface extérieure (112) et
• une bande de roulement (120) prévue sur une partie de la surface extérieure (112),
- la fabrication d'un ruban (200) à partir d'un matériau insonorisant, le ruban (200) comprenant
• une première surface principale (211), une seconde surface principale (212) opposée à la première surface principale (211),
• une première extrémité (201), une seconde extrémité (202) opposée à la première extrémité (201),
• une longueur (Lr), une largeur (Wr), et une épaisseur (Tr), dans lequel
• une direction (Dt) de l'épaisseur (Tr) est normale pour au moins une partie de la première surface principale (211) et normale pour au moins une partie de la seconde surface principale (212),
• le ruban (200) s'effile vers la seconde extrémité (202) du ruban dans la direction (Dt) de l'épaisseur (Tr), et
- la fixation de la seconde surface principale (212) sur la surface intérieure (111) du corps (101) du pneumatique (100) de telle sorte
• qu'une ligne centrale (CL) du ruban (200) qui est parallèle à une direction (DI) de la longueur (Lr) du ruban (200) devient parallèle à une direction circonférentielle (SC) du corps (101) du pneumatique (100) et
• que la première extrémité (201) du ruban est en contact avec la seconde extrémité (202) du ruban (200), dans lequel
- le ruban (200) comprend une première surface d'extrémité (221) à la première extrémité (201) et une seconde surface d'extrémité (222) à la seconde extrémité (202), et
- la direction (DI) de la longueur (Lr) du ruban (200) est parallèle ou forme un quatrième angle minimum (φ) d'au plus 10 degrés avec une troisième normale (M1) d'une partie de la première surface d'extrémité (221) ou de la totalité de la première surface d'extrémité (221), **caractérisé en ce que**
- la direction (DI) de la longueur (Lr) du ruban (200) forme un cinquième angle minimum (γ) de 30 à 60 degrés avec la quatrième normale (M2) d'une partie de la seconde surface d'extrémité (222) ou la quatrième normale (M2) de la totalité de la seconde surface d'extrémité (222), et **en ce que** le procédé comprend
- la compression d'au moins une partie de la seconde extrémité (202) du ruban contre la première extrémité (201) du ruban lors de la fixation du ruban au corps (101) du pneumatique (100).

7. Procédé selon la revendication 6, dans lequel
- la totalité de la seconde surface d'extrémité (222) est plane ;
de préférence,
- la totalité de la seconde surface d'extrémité (222) est plane et la totalité de la première surface d'extrémité (221) est plane.

8. Procédé selon la revendication 6 ou 7, dans lequel
- la longueur (Lr) du ruban (200) est supérieure ou égale à une circonférence du corps (101) du pneumatique (100), dans lequel
- la circonférence du corps (101) du pneumatique (100) est définie sur une ligne centrale de la surface intérieure (111) du corps (101) du pneumatique (100) ; de préférence,
- la longueur (Lr) du ruban est supérieure à la circonférence du corps du pneumatique (101) de 0,5 à 5 mm.

9. Procédé selon l'une quelconque des revendications 6 à 8, comprenant
- la fixation de la seconde surface principale (212) du ruban (200) à la surface intérieure (111) du corps (101) du pneumatique à l'aide d'un adhésif (301) et/ou d'un ruban adhésif (302), tel qu'un ruban adhésif double face.

10. Procédé selon l'une quelconque des revendications 6 à 9 ou pneumatique (100) selon l'une quelconque des revendications 1 à 5, dans lequel
- la forme du ruban (200) ne s'effile pas vers la première extrémité (201) du ruban (200) au moins dans le sens de l'épaisseur du ruban ;
de préférence également
- la forme du ruban (200) est, dans une direction de la largeur du ruban, non effilée vers la seconde extrémité (202) du ruban (200) et
- la forme du ruban (200) est, dans une direction de la largeur du ruban, non effilée vers la première extrémité (201) du ruban (200).

11. Procédé selon l'une quelconque des revendications 6 à 10 ou pneumatique (100) selon l'une quelconque des revendications 1 à 5 ou 10, dans lequel
- le corps (101) du pneumatique (100) comprend du caoutchouc et
- [i] une densité du matériau du ruban (200) est inférieure à 30 kg/m³ et/ou [ii] le ruban (200) comprend de la mousse polymère ;
de préférence,
- le ruban (200) comprend de la mousse polymère ou est constitué de mousse polymère ; plus préférablement,
- le ruban comprend de la mousse polymère ou est constitué de mousse polymère, dans lequel un matériau de matrice polymère de la mousse polymère est choisi dans le groupe constitué d'éthylène-acétate de vinyle, de polyéthylène (tel que le LDPE et le HDPE), de caoutchouc nitrile, de polychloroprène, de néoprène, de polyimide, de polypropylène (tel que le polypropylène expansé et le papier polypropylène), de polystyrène (tel que le polystyrène expansé, le polystyrène extrudé, la mousse de polystyrène, et le papier polystyrène), de polyuréthane (tel que le polyuréthane à faible résilience, la mousse à mémoire de forme, et le sorbothane), de chlorure de polyvinyle et de silicone.

12. Procédé selon l'une quelconque des revendications 6 à 11 ou pneumatique selon l'une quelconque des revendications 1 à 5 ou 10 ou 11, dans lequel
- une épaisseur (Tr) du ruban (200) est de 10 mm à 75 mm, de préférence de 20 mm à 60 mm, plus préférablement de 30 mm à 50 mm.

13. Procédé selon l'une quelconque des revendications 6 à 12 ou pneumatique selon l'une quelconque des revendications 1 à 5 ou 10 à 12, dans lequel
- une largeur (Wr) du ruban (200) est au moins égale à 1/4, de préférence au moins 1/3, d'une largeur (W111) d'une projection normale de la surface intérieure (111) à un plan comprenant un axe de rotation (AX) du corps (101) du pneumatique (100).
